# EUROPEAN PATENT APPLICATION

(11) **EP 4 292 485 A1**
(43) Date of publication of application: **20.12.2023**
(21) Application number: 22178561.1
(22) Date of filing: 13.06.2022
(51) Int. Cl.: A47J 43/08

(54) **CLUTCH SHAFT AND ROTARY TOOL ATTACHMENT OF A KITCHEN MACHINE**

(71) Applicant: BSH Hausgeräte GmbH, 81739 München (DE)
(72) Inventor: Cresnar, Mihael, 3205 Vitanje (SI); Enci, David, 3331 Nazarje (SI)

(57) **Abstract**

Disclosed is a coupling shaft 10, 10' comprising a clutch section, a transfer section 12 and at least one fastening means 13. The clutch section 11 is configured to be connected with a coupling component of a base station of a kitchen machine, and the transfer section 12 is configured to transfer a rotation about a centre axis X of the coupling shaft to a rotary tool attachment 20 when the coupling shaft is combined therewith. The at least one fastening means 13 is configured to fasten the rotary tool attachment to the coupling shaft. The at least one fastening means 13 comprises one or various ring/s 13a, 13b at least partially made of an elastic polymer and surrounding the centre axis X of the coupling shaft, and being.

Further disclosed are a rotary tool attachment 20, a rotary tool assembly 100, a bowl assembly 1, and a kitchen machine.

## Description

The present invention concerns a clutch shaft of a kitchen machine, and a rotary tool attachment configured to be combined with such clutch shaft. The invention further concerns a rotary tool assembly (comprising a coupling shaft and a rotary tool attachment), a bowl assembly (comprising a bowl and a rotary tool assembly), and a kitchen machine comprising a base and such bowl assembly.

Modern kitchen machines provide a compact and versatile appliance for processing food. They usually include a base station comprising an electric motor, and a bowl for receiving the respective food to be processed. A housing of the base station usually defines an intended use position for the bowl, enabling a respective rotary tool attachment arranged in the bowl to be coupled to the electric motor.

To realise such coupling, a coupling shaft can be fixable to the bowl so as to run through the bottom thereof. The rotary tool attachment can be attached to a coupling shaft's portion thus arranged inside the bowl, while an opposite portion of the coupling shaft may be coupled to a clutch component of the base station.

Document EP 3 771 383 A1 discloses such kitchen machine, wherein a radially compressible retaining spring ring comprised by the coupling shaft is configured to be caught by a structure of the rotary tool attachment. In this way, the rotary tool can be fixed to the coupling shaft and, therewith, to the bowl.

The present invention targets at improving fixation of a rotary tool attachment to a coupling shaft of a kitchen machine.

The object is achieved by a coupling shaft according to claim 1, a rotary tool attachment according to claim 10, a rotary tool assembly according to claim 12, a bowl assembly according to claim 13, and a kitchen machine according to claim 14. Advantageous embodiments are disclosed in the dependent claims, the description and the drawings.

A coupling shaft according to the present invention is devised to rotate a rotary tool attachment of a kitchen machine. It comprises a clutch section, a transfer section and at least one fastening means. Therein, the clutch section is configured to be connected with a coupling component of a base station of the kitchen machine. The transfer section is configured to transfer a rotation about a centre axis of the coupling shaft to at least one rotary tool attachment to be combined with the coupling shaft; for instance, the transfer section may comprise a profile (such as one or more protrusion/s (e.g., bar/s and/or cog/s) and/or clearance/s) configured to engage with a respective structure of the rotary tool attachment.

The fastening means of the coupling shaft comprises one or various ring/s at least partially made of an elastic polymer and surrounding the centre axis of the coupling shaft. Due to its/their elasticity, the ring/s is/are adapted to detachably engage with a profile of a contacting surface of a rotary tool attachment. Thereby, the rotary tool attachment can be detachably fastened to the coupling shaft. Accordingly, when the coupling shaft is fixed to a bowl, the fastening means is adapted to hold the rotary tool attachment inside the bowl, independently of the respective orientation thereof.

In particular, the one ring or at least one of the various rings, respectively, may advantageously be at least partially made of silicone, in particular of a silicone elastomer. Such material is non-toxic, particularly heat resistant and durable.

A rotary tool attachment according to the present invention is an attachment of a kitchen machine. It comprises at least one tool (such as a rotatable knife, a rotatable cutting disk and/or a stirrer, for instance), and it is configured to be combined with a coupling shaft according to an embodiment of the present invention, so as to adopt a rotation thereof. A surface of the rotary tool attachment has at least one depression (such as a ring-shaped groove or a portion of such ring-shaped groove) for releasably accommodating a radially outer portion of the one or at least one of the various rings, respectively, of the coupling shaft's fastening means; as is to be understood, in this document, the terms "axial" and "radial" and their derivatives always relate to the designated axis of rotation of the coupling shaft and of the rotary tool attachment, which axis is the longitudinal centre axis of the coupling shaft.

In particular, the rotary tool attachment may comprise a pipe-shaped connection portion devised to be imposed on the transfer section. According to advantageous embodiments, the rotary tool attachment (in respective embodiments in particular the pipe-shaped connection portion thereof) is at least partially made of plastics.

Preferably, the rotary tool attachment is configured to cause a sound when taking the radially outer portion of the ring/s into the at least one depression, in particular a clicking sound or a snapping sound. By such sound, a user thus can be ensured that the rotary tool attachment is properly combined with the coupling shaft. For example, the at least one depression may be delimited by an edge entailing a sudden snapping of the radially outer portion of the ring/s into the at least one depression, thereby producing such sound.

A rotary tool assembly according to the present invention comprises a coupling shaft according to an embodiment of the present invention, and a rotary tool attachment according to an embodiment of the present invention. Therein, the rotary tool attachment is configured to be combined with the coupling shaft, such that a rotation of the coupling shaft can be transferred to the rotary tool attachment. Therein, the at least one depression of the rotary tool attachment is configured to releasably accommodate a radial outer portion of the one or at least one of the rings. Preferably, a sound such as a clicking sound or a snapping sound is produced when said radial outer portion of said ring is taken into the depression.

A bowl assembly according to the present invention is an attachment of a kitchen machine, in particular of a kitchen machine according to an embodiment of the present invention. It comprises a bowl and a rotary tool assembly according to an embodiment of the present invention. Therein, the coupling shaft of the rotary tool assembly is configured to be fixed to the bowl, preferably running through a bottom of the bowl.

A kitchen machine according to the present invention comprises a base and a bowl assembly according to an embodiment of the present invention. The base comprises an electric motor; preferably the base further comprises operation means and at least one control unit. The coupling shaft of the bowl assembly is configured to be connected with a coupling component of the base (when the bowl is positioned at a designated use position defined by a housing of the base). Thereby, the coupling shaft can be coupled to the electric motor.

The present invention thus facilitates the advantage that a bowl assembly comprising a bowl, a coupling shaft according to the present invention fixed to the bowl, and a rotary tool attachment fastened to the coupling shaft (in particular, a bowl assembly according to an embodiment of the present invention) can be tilted, such as to pour out a content of the bowl, while nevertheless the rotary tool attachment remains fastened at its position inside the bowl. Therein, the fastening means with its polymer ring/s provides a soft and smooth detachable fastening of the rotary tool attachment to the coupling shaft.

Indeed, metal retaining rings conventionally used to fix a rotary tool attachment to a coupling shaft have dimensions adapted to tolerances and ensuring that they can be attached to the shaft. Due to their oversized dimension, such retaining rings may cause that an undue force is required to detach the rotary tool attachment. Moreover, such retaining rings may easily get out of a designated position, which may result in food accumulating in a thus cleared space, in particular in a gap that may arise due the retaining ring's dislocation. Moreover, such metal retaining rings may cause abrasion of a contacting surface of the rotary tool attachment, in particular of a structure thereof configured to catch the retaining ring. Consequently, the stability and reliability of the fastening of the rotary tool attachment to the coupling shaft may decrease.

The present invention overcomes these disadvantages. Due to the elasticity of its/their material, the ring/s can be easily installed while having a dimension tightly fitting to a holding structure (such as a groove) of the coupling shaft. As a consequence, a dislocation of the ring/s and, therewith, both a slipping off of the ring/s and the occurrence of a gap in which food might accumulate can be avoided.

According to advantageous embodiments, the one or - in respective embodiments - at least one of the several elastic ring/s is arranged at a portion of the transfer section, which portion faces away from the clutch section.

As a user typically touches a rotary tool attachment at a side opposite to the coupling shaft's clutch section when he combines the rotary tool attachment with the coupling shaft, in such embodiments, the user's fingers are close to the ring when the radially outer portion thereof is being taken into the at least one depression of the rotary tool attachment. As a consequence, the user may have a particularly good haptic control of the accommodation and, therewith, of a proper mounting of the rotary tool attachment.

Alternatively or - in embodiments comprising various rings - additionally at least one ring of the coupling shaft's fastening means may be arranged at a transfer section's portion which faces the clutch section. Such position of the ring facilitates a particularly stable fastening of the rotary tool attachment to the coupling shaft. Moreover, in this position, a potential further function the ring may have may be particularly advantageous:
According to preferred embodiments, the one ring or at least one of the several rings is configured to seal, when the rotary tool attachment is combined with the coupling shaft, at least one interspace between the rotary tool attachment and the coupling shaft, in particular an interspace in a region of the transfer section of the coupling shaft. Thereby, respectively processed food is prevented to enter said interspace, which prevention improves the processing and provides for an easier and reliable cleaning of the rotary tool attachment and the coupling shaft. For instance, in embodiments in which the rotary tool attachment comprises a pipe-shaped connection portion designated to be imposed on the transfer section as mentioned above, the said ring may inhibit that food intrudes in the pipe-shaped connection portion imposed on the transfer section.

According to advantageous embodiments of the present invention, the one ring or at least one of the several rings (depending on the embodiment) may be held in a holding structure of the coupling shaft (in particular, of the transfer section thereof), which holding structure may preferably comprise a ring groove into which the ring may be inserted, with a radially outer portion of the ring radially protruding outwards. Such holding structure facilitates a particularly durable positioning of the ring.

Within the groove, the ring may be stretched against its internal resistance. Additionally or alternatively, at least a portion of the groove may advantageously be shaped complementary to at least an area of the ring, in particular to a radially inner portion (in particular a portion facing the designated axis of rotation of the coupling shaft). Thereby, the fastening of the ring can be further strengthened.

According to advantageous embodiments, the one or at least one of the several ring/s, respectively, comprises at least one edge and/or at least one spike. Such structure may (additionally or alternatively to the means mentioned above) improve the durability with which the ring is embedded in the coupling shaft, in particular in embodiments further comprising a holding structure with a ring groove shaped complementary to at least a portion of the ring as mentioned above.

Additionally or alternatively, the one or at least one of the several ring/s, respectively, may preferably have an extension in radial direction which is larger than its extension in axial direction. Thereby, the ring can provide of an advantageous flexibility in axial direction, thus facilitating a smooth combination with a rotary tool attachment as detailed above. Moreover, said shape allows a solid holding of the ring in the coupling shaft.

Further to the function provided by the rotary tool attachment (which may include a chopping, grinding or stirring function, for instance), the kitchen machine may preferably provide at least one additional function, such as a heating function and/or a weighing function. In particular, the kitchen machine may be configured as a multifunctional kitchen machine.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1:: a first exemplary embodiment of a coupling shaft according to the present invention;
- Fig. 2:: a second exemplary embodiment of a coupling shaft according to the present invention;
- Fig. 3:: a portion of a coupling shaft according to an exemplary embodiment of the present invention in a cross section;
- Fig. 4:: a portion of a rotary tool attachment according to an exemplary embodiment of the present invention in a cross section; and
- Fig. 5:: an illustration of an exemplary bowl assembly according to the present invention.

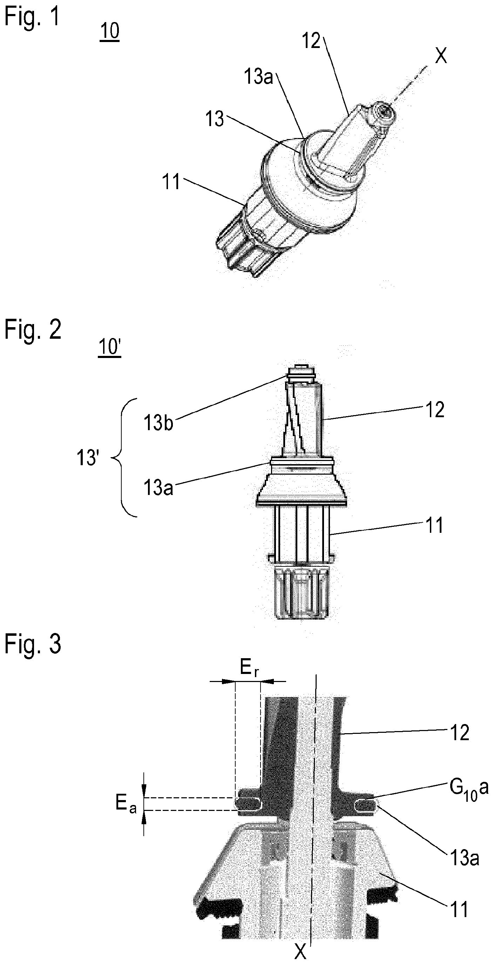

In Figure 1, a first exemplary coupling shaft 10 according to the present invention is shown in a perspective view. The coupling shaft 10 comprises a clutch section 11 configured to be connected with a coupling component of a base station of a kitchen machine (not shown), and to receive from the coupling component (when driven) a rotation about a designated axis X of rotation which axis coincides with a centre axis of the coupling shaft 10.

The coupling shaft 10 further comprises a transfer section 12 which in the exemplary embodiment depicted provides of three wings configured to engage with a respective structure of a rotary tool attachment (not shown) when this is imposed on the transfer section. Thereby, the transfer section is adapted to transfer a received rotation to the rotary tool attachment.

Moreover, the coupling shaft 10 comprises a fastening means 13 for fastening a rotary tool attachment (not shown in Figure 1) when this is imposed on the transfer section 12. In the embodiment shown in Figure 1, the fastening means comprises a ring 13a surrounding the centre axis of the coupling shaft 10 (being the designated axis X of rotation), wherein the ring 13a is arranged at an end portion of the transfer section 12, namely the end portion facing the clutch section 11. Moreover, the ring 13a is at least partially made of an elastic polymer such as silicone, in particular a silicone elastomer.

Due to this material, the ring 13a could be easily installed in a holding structure (comprising a groove as detailed below with respect to Figure 3) of the coupling shaft, while nevertheless having a dimension tightly fitting to the holding structure. Thereby, dislocation of the ring can be avoided, which dislocation can entail undesired accumulation of food in an occurring gap. The ring may even seal an interspace between the coupling shaft and a rotary tool attachment imposed thereon; due to its position at the portion of the transfer section 12 facing the clutch section 11, the thus sealing ring may hold the transfer section 12 and an inner space of the rotary tool attachment free of food accumulation.

Moreover, the elastic material causes a soft feeling and requires even forces when the rotary tool attachment is fastened to or detached from the coupling shaft, respectively. Furthermore, wearing of the rotary tool attachment can be prevented due to the elastic polymer material of the ring/s.

Figure 2 shows an alternative embodiment of a coupling shaft 10' according to the present invention. The coupling shaft comprises a clutch section 11, a transfer section 12 and a ring 13a which are configured as the respective components of the coupling shaft 10 shown in Figure 1 and described above.

The ring 13a belongs to a fastening means 13' of the coupling shaft 10', which fastening means 13' in this embodiment further comprises a ring 13b which is positioned at a portion of the transfer section 12 which faces away from the clutch section 11. The ring 13b is at least partially made of an elastic polymer, due to which in particular a tight fitting of the ring 13b could be realised, such that the risk of dislocation is minimised.

The coupling shaft 10' thus provides of a fastening means 13' comprising two rings 13a, 13b at least partially made of an elastic polymer and positioned at opposite ends of the transfer section 12 of the coupling shaft 10'. Therewith, a radial wobbling of the rotary tool attachment is prevented, and a particularly durable fastening of a rotary tool attachment (not shown) to the coupling shaft 10' can be achieved.

Figure 3 shows a cross section of a portion of an exemplary coupling shaft embodying the present invention. In this portion, a ring 13a is arranged at an end of a transfer section 12 facing a clutch section 11 of the coupling shaft. In particular, the portion shown by Figure 3 may relate to each of coupling shafts 10 and 10' shown in Figures 1 and 2, respectively.

As can be taken from Figure 3, the ring 13a is held in a holding structure including a groove G₁₀a which is shaped complementary to a radially inner portion of the ring 13 and thus tightly abuts on the ring 13a. An extension Eᵣ of the ring 13a in radial direction is larger than an extension Eₐ of the ring 13 in axial direction (respectively with respect to the designated axis X of rotation). Thereby, the ring 13a both can be durably held in the groove G₁₀a and has advantageous properties with respect to its deformation caused by a rotary tool attachment being combined with the coupling shaft or separated therefrom.

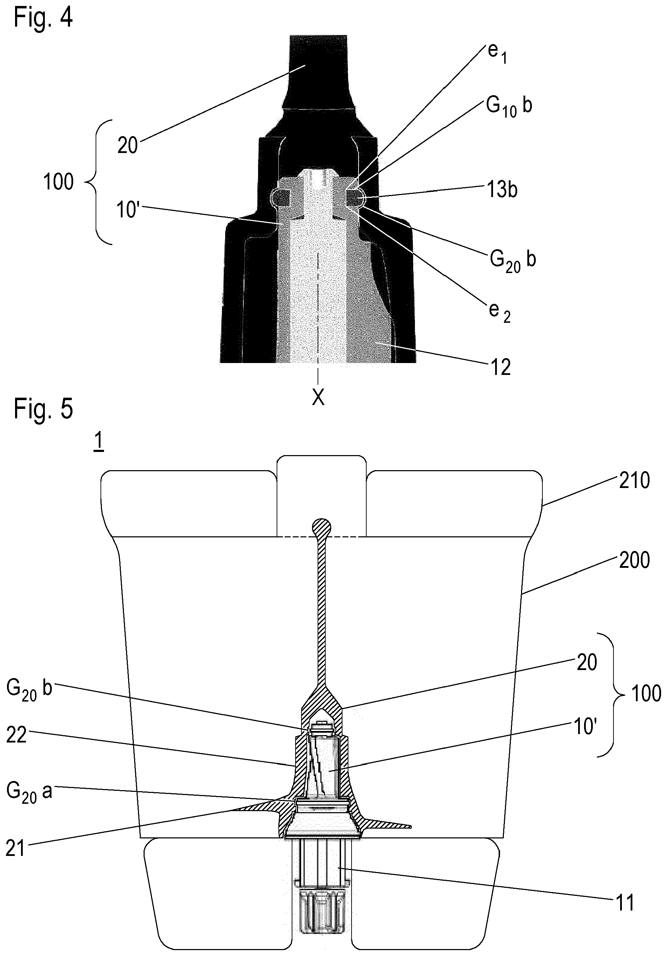

Figure 4 depicts a portion of an exemplary embodiment of a rotary tool assembly 100 according to the present invention in cross section. The rotary tool assembly 100 comprises a coupling shaft 10' which may be that shown complete in Figure 2, and a rotary tool attachment 20 according to an embodiment of the present invention. The rotary tool attachment 20 comprises a pipe-shaped connection portion 22 which in the state shown in Figure 4 is imposed on the transfer section 12 of the coupling shaft 10'. Therein, a depression G₂₀b, which in the present case is a ring-shaped groove running around the designated axis X of rotation, accommodates a radially outer portion of the ring 13b.

As can be taken from Figure 4, the ring 13b has a radially inner side forming two edges e₁, e₂ which circularly run around the designated axis X of rotation. The ring 13b is held in a holding structure of the coupling shaft 10', which holding structure forms a groove G₁₀b. Therein, the groove G₁₀b is shaped complementary to the radially inner side of the ring 13b. In particular, the groove G₁₀b forms two annular corners each accommodating a respective one of the edges e₁, e₂ of the ring, which provides for a particularly solid fastening of the ring in the groove G₁₀b.

Figure 5 illustrates a bowl assembly 1 according to an exemplary embodiment of the present invention. The bowl assembly 1 comprises a bowl 200 with a lid 210, and a rotary tool assembly 100 according to an embodiment of the present invention. The tool assembly 100 comprises the coupling shaft 10' shown in Figure 2, and a rotary tool attachment 20 comprising a tool 21 (which in the present case is a knife assembly) and a pipe-shaped connection portion 22 which in the state depicted in Figure 5 is imposed on the transfer section 12 of the coupling shaft 10'. Therein, depressions G₂₀a, G₂₀b each formed as an annular groove in a radially inner surface of the connection portion 22 releasably accommodate a radially outer portion of a respective one of rings 13a, 13b.

Figure 5 shows the bowl assembly 1 in a situation in which the rotary tool assembly 100 is mounted to the bowl 200. In particular, the coupling shaft 10' is fixed to the bowl 200, extending through a hole in the bottom thereof. As a consequence, the clutch portion 11 of the coupling shaft 10' may be connected with a clutch portion of a base of a kitchen machine (not shown). Thereby, the coupling shaft 10 and, therewith, the rotary tool attachment 20 can be rotated by means of an electric motor comprised by the base of the kitchen machine.

Disclosed is a coupling shaft 10, 10' comprising a clutch section, a transfer section 12 and at least one fastening means 13. The clutch section 11 is configured to be connected with a coupling component of a base station of a kitchen machine, and the transfer section 12 is configured to transfer a rotation about a centre axis X of the coupling shaft to a rotary tool attachment 20 when the coupling shaft is combined therewith. The at least one fastening means 13 is configured to fasten the rotary tool attachment to the coupling shaft. The at least one fastening means 13 comprises one or various ring/s 13a, 13b at least partially made of an elastic polymer and surrounding the centre axis X of the coupling shaft, and being.

Further disclosed are a rotary tool attachment 20, a rotary tool assembly 100, a bowl assembly 1, and a kitchen machine.

### Reference signs

- 1: bowl assembly

- 10, 10': coupling shaft
- 11: clutch section
- 12: transfer section
- 13, 13': fastening means
- 13a, 13b: ring

- 20: rotary tool attachment
- 21: tool
- 22: pipe-shaped connection portion of 20

- 100: rotary tool assembly
- 200: bowl
- 210: lid

- e₁, e₂: edges of ring 13b
- Eₐ: extension of ring 13a in axial direction
- Eᵣ: extension of ring 13a in radial direction
- G₁₀a, G₁₀b: groove of holding structure
- G₂₀a, G₂₀b: depression in 20
- X: designated axis of rotation/ centre axis of coupling shaft

## Claims

**1.** Coupling shaft (10, 10') of a kitchen machine, the coupling shaft configured to be combined with a rotary tool attachment and comprising
- a clutch section (11) configured to be connected with a coupling component of a base station of the kitchen machine;
- a transfer section (12) configured to transfer a rotation about a centre axis (X) of the coupling shaft to the rotary tool attachment (20) when the coupling shaft is combined therewith; and
- at least one fastening means (13) configured to fasten the rotary tool attachment to the coupling shaft, the at least one fastening means (13) comprising one or various ring/s (13a, 13b) surrounding the centre axis (X) of the coupling shaft, and being at least partially made of an elastic polymer.

**2.** Coupling shaft according to claim 1, wherein the one or at least one of the several elastic ring/s (13a), respectively, is arranged at a transfer section's portion which faces the clutch section (11).

**3.** Coupling shaft according to one of claims 1 or 2, wherein the one or at least one of the several elastic ring/s (13b), respectively, is arranged at a transfer section's portion which is opposite to the clutch section (11).

**5.** Coupling shaft according to one of the preceding claims, wherein the one or at least one of the several rings, respectively, is at least partially made of silicone, in particular of a silicone elastomer.

**6.** Coupling shaft according to one of the preceding claims, wherein the one ring or at least one of the several rings (13a, 13b) is held in a holding structure of the coupling shaft, which holding structure includes at least one groove (G₁₀a, G₁₀b).

**7.** Coupling shaft according to claim 6, wherein at least a portion of the at least one groove (G₁₀a, G₁₀b) is shaped complementary to a radially inner portion of the ring (13a, 13b).

**8.** Coupling shaft according to one of the preceding claims, wherein the one or at least one of the several ring/s (13b), respectively, comprises at least one edge (e₁, e₂) and/or at least one spike.

**9.** Coupling shaft according to one of the preceding claims, wherein the one or at least one of the several ring/s (13a), respectively, has an extension (Eᵣ) in radial direction which is larger than its extension (Eₐ) in axial direction.

**10.** Rotary tool attachment (20) for a kitchen machine, the rotary tool attachment comprising at least one tool (21) and being configured to be combined with a coupling shaft (10, 10') according to one of the preceding claims so as to adopt a rotation of the coupling shaft,
wherein the rotary tool attachment has at least one depression (G₂₀a, G₂₀b) for releasably accommodating a radial outer portion of the one or at least one of the various rings (13a, 13b), respectively, of the coupling shaft's fastening means (13).

**11.** Rotary tool attachment according to claim 10, comprising a pipe-shaped connection portion (22) configured to be imposed on the transfer section of the coupling shaft.

**12.** Rotary tool assembly (100) comprising a coupling shaft (10, 10') according to one of claims 1 to 9, and a rotary tool attachment (20) according to one of claims 10 or 11, wherein the rotary tool attachment is configured to be fastened to the coupling shaft by its at least one depression (G₂₀a, G₂₀b) accommodating the one or at least one of the various rings (13a, 13b), respectively, of the fastening means (13) of the coupling shaft (10, 10').

**13.** Bowl assembly (1) of a kitchen machine, the bowl assembly comprising a bowl (200) and a rotary tool assembly (100) according to claim 12, the coupling shaft (10, 10') of which is configured to be fixed to the bowl (200).

**14.** Kitchen machine comprising a base with an electric motor, and a bowl assembly (1) according to claim 13, wherein the coupling shaft (10, 10') of the bowl assembly (1) is configured to be coupled to the electric motor.

**15.** Kitchen machine according to claim 14, which is configured as a multifunctional kitchen machine.
